# EUROPÄISCHE PATENTSCHRIFT

(11) **EP 0 959 978 B1**
(45) Veröffentlichungstag und Bekanntmachung des Hinweises auf die Patenterteilung: **20.11.2002**
(21) Anmeldenummer: 98901967.4
(22) Anmeldetag: 14.01.1998
(51) Int. Cl.: B01D 29/21, B01D 29/96

(54) **FILTER**
FILTER
FILTRE

(30) Priorität: 22.02.1997 DE 19707132
(43) Veröffentlichungstag der Anmeldung: 01.12.1999
(73) Patentinhaber: FILTERWERK MANN & HUMMEL GmbH, 71631 Ludwigsburg (DE)
(72) Erfinder: JAWUREK, Heinz, D-74861 Neudenau (DE); POLDNER, Erich, D-71711 Steinheim (DE); WENDT, Heinz, D-71642 Ludwigsburg (DE)
(74) Vertreter: Voth, Gerhard, Dipl.-Ing.
(86) Internationale Anmeldenummer: EP9800172
(87) Internationale Veröffentlichungsnummer: WO98036818

(56) Entgegenhaltungen:
- EP-A- 0 319 518
- DE-A- 19 527 844
- DE-U- 9 312 856
- US-A- 5 538 626

## Beschreibung

Die Erfindung betrifft ein Filter gemäß den Merkmalen des Anspruchs 1 oder alternativ des Anspruchs 7.

Derartige Filter bzw. Filterelemente sind z. B. bekannt aus dem DE GM 296 16 834, bei dem ein Filtereinsatz gezeigt wird, dessen Stirnseiten dichtend mit je einer Stirnscheibe verbunden sind, wobei eine oder beide Stirnscheiben je eine Durchbrechung aufweisen, in deren Randbereich je eine ringförmige Dichtung angebracht ist, die im eingebauten Zustand des Filtereinsatzes mit einem Teil eines Filtergehäuses dichtend zusammenwirkt, und wobei mindestens eine der Stirnscheiben mit einem von der Ebene der Stirnscheibe axial nach außen beabstandeten, kragenförmigen Ausziehgriff ausgebildet ist, dessen Außendurchmesser kleiner ist als der Außendurchmesser der Stirnscheibe.

Weiterhin ist ein derartiger Filtereinsatz aus der EP A1 0711 587 bekannt, bei dem auf einer der Stirnseiten des Filtereinsatzes ebenfalls eine kragenartige Erhöhung dargestellt wird, mittels der es möglich ist, den Filtereinsatz aus dem Gehäuse zu entnehmen.

Des weiteren ist aus der DE-OS 43 33 151 eine spitzennahe Verriegelungsmechanik für ein Schreibgerät bekannt, bei dem drei Hülsenteile - Zentrierhülse, Griffhülse und Innenhülseineinander geschachtelt sind, wobei ein vorderseitiges Drehlager vorgesehen ist, das zwischen der Griffhülse und der Zentrierhülse angesiedelt ist und zwischen dem rückseitigen Endbereich der Zentrierhülse und der axial feststehenden und nicht drehbaren Innenhülse eine rotierend arbeitende Rast- bzw. Entrastmechanik bildet, wobei die Griffhülse auf der Außenseite der Innenhülse axial verschiebbar ist.

Will man derartige Filter bzw. Filterelemente in der Weise einsetzen, dass sie aus dem Gehäuse entnehmbar sind, ohne dass man mit dem Filterelement direkt in Kontakt kommt, so ist daran nachteilig, dass die beschriebenen Griffelemente, die kragenartig ausgestaltet sind, direkt am Filterelement angebracht sind, so dass ein direkter Kontakt mit dem Filterelement unausweichlich ist. Man könnte nun eine zusätzliche Vorrichtung vorsehen, die das Filterelement im Bereich der kragenförmigen Ausgestaltung zangenförmig greift. Dies hat jedoch den Nachteil, dass eine weitere kostenträchtige Apparatur geschaffen werden muss, um den direkten Kontakt mit dem Filterelement zu vermeiden.

Aus der EP A 0 319 518 ist ein Filter bekannt, welcher wie alle geläufigen Filter ein aus zwei Teilen bestehendes Gehäuse und ein darin befestigtes Filterelement umfasst. Das Filterelement und ein Gehäuseteil sind mittels einer lösbaren Rastverbindung miteinander verbunden und entsprechende Rastmittel vorgesehen. Ein Nachteil der im Stand der Technik bekannten Einrichtung besteht darin, dass ein Entriegeln, ohne in direkten manuellen Kontakt mit dem Filterelement zu kommen, nicht möglich ist.

Es ist somit Aufgabe der Erfindung, eine Vorrichtung der eingangs genannten Art dahingehend zu verbessern, dass ein Filter bzw. ein Filterelement entsteht, das es einfacher gestattet, ein Filterelement zu montieren bzw. zu demontieren bei stets sicherem Betrieb, ohne mit dem Filterelement in direkten Kontakt zu kommen.

Erfindungsgemäß wird die Aufgabe durch die in dem unabhängigen Anspruch 1 beschriebenen Merkmale gelöst.

In einer vorteilhaften Weiterbildung ist vorgesehen, dass wenigstens ein Rastmittel am Filterelement angeordnet ist. Das am Filterelement angebrachte Rastmittel greift elastisch in eine korrespondierende Vertiefung am Gehäuse ein, um die lösbare Rastverbindung herzustellen.

Weiter kann man erfindungsgemäß vorsehen, dass wenigstens ein Rastmittel an wenigstens einem Gehäuseteil angeordnet ist. Im Sinne einer kinematischen Umkehrung ist die Anbringung der Rastmittel auch am Gehäuse denkbar.

Eine vorteilhafte Weiterbildung der Erfindung sieht vor, dass wenigstens eine korrespondierende Aussparung an wenigstens einem Gehäuseteil angeordnet ist. Diese Aussparungen geben die Gewähr, dass das Ein- bzw. Ausrasten definiert geschieht, insbesondere bezüglich des Ausrastens, wenn das Filterelement aus dem Gehäuse ausgebracht werden soll. In diesem Fall ist eine axiale Bewegung des Filterelements vorgesehen, wobei durch eine Wandlung der axialen Bewegung in eine Drehung das Filterelement innerhalb der Aussparung in eine Position gelangt, die es gestattet, entgegen der ursprünglich auf das Filterelement aufgebrachten Bewegung dieses aus dem Gehäuseteil auszubringen.

In einer anderen vorteilhaften Weiterbildung ist vorgesehen, dass wenigstens eine korrespondierende Aussparung am Filterelement angeordnet ist. Im Sinne einer kinematischen Umkehrung ist die Anbringung der Aussparung auch am Filterelement denkbar.

Erfindungsgemäß wird die Aufgabe auch durch ein Filter gelöst, das ein Gehäuse umfasst, das aus wenigstens zwei Gehäuseteilen besteht, ein Filterelement, das im Gehäuse befestigt ist, wobei wenigstens ein Rastmittel vorgesehen ist, mittels dem eine lösbare Rastverbindung zwischen Filterelement und wenigstens einem der Gehäuseteile herstellbar ist, wobei im Bereich des Rastelements eine Hülse angeordnet ist.

Ausführungsbeispiele der Erfindung sind in den Zeichnungen dargestellt und werden im folgenden näher erläutert.

Die Zeichnungen zeigen:
- Figur 1a: einen Schnitt durch ein Filter
- Figur 1b: einen Schnitt durch den Gehäusedeckel aus Figur 1
- Figur 1c: eine Abwicklung der Aussparungsgeometrie im Gehäusedeckel
- Figur 1d: eine weitere Variante einer Abwicklung
- Figur 2a: einen Schnitt durch ein Filter
- Figur 2b: einen Schnitt durch ein Filterelement
- Figur 3a: einen Schnitt durch ein Filter
- Figur 3b: einen Schnitt durch ein Filter
- Figur 3c: einen Schnitt durch ein Filter
- Figur 3d: einen Schnitt durch ein Filter

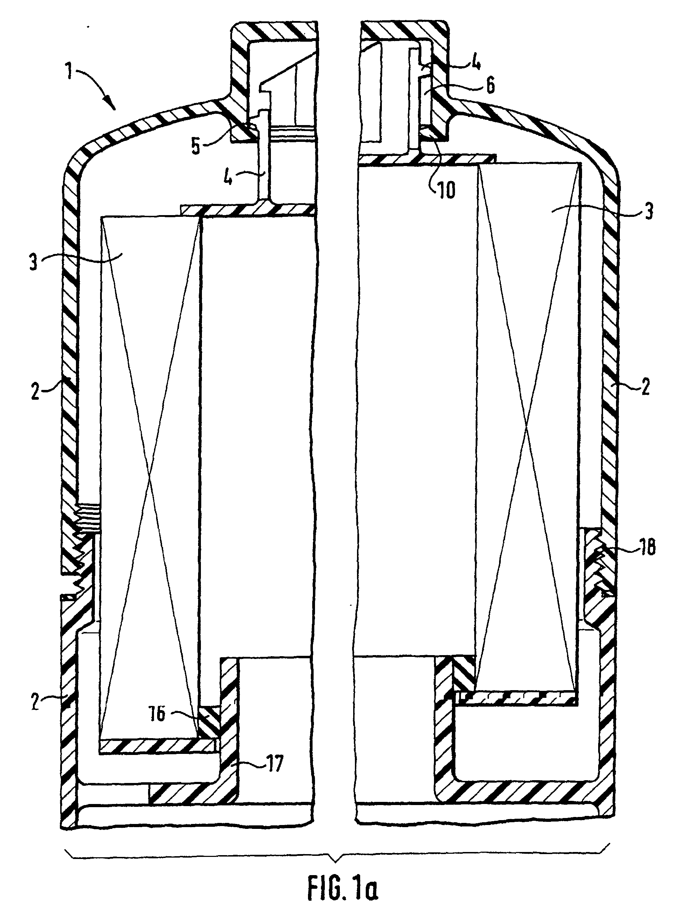

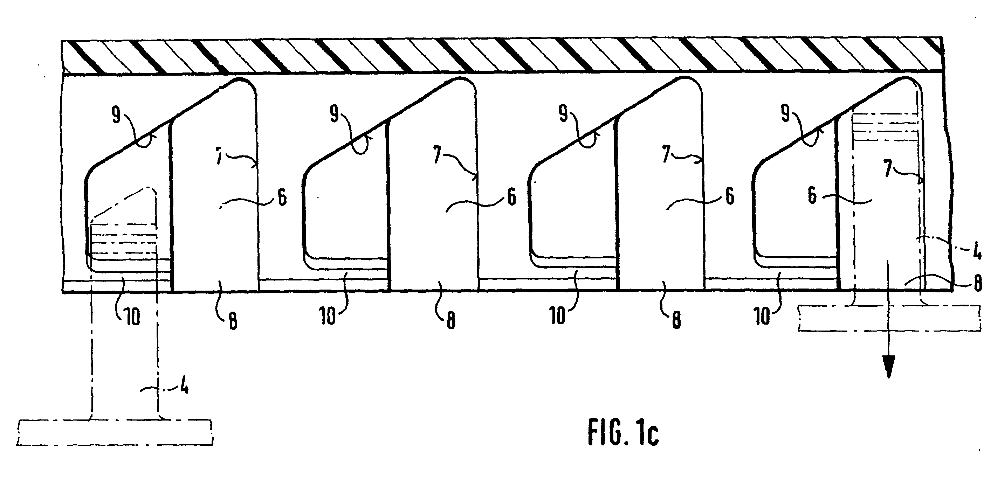

In Figur 1a wird ein Schnitt durch ein Filter dargestellt, das ein Gehäuse 1 aufweist, das seinerseits aus zwei verschraubten Gehäuseteilen 2 besteht. Das Filter bzw. dessen Gehäuse enthält neben einem nicht dargestellten Ein- und Auslaß für das Fluid ein hohlzylindrisches Filterelement 3, an dessen Stirnseite Rastmittel 4 vorgesehen sind, die zu einer Rastverbindung 5 zwischen Filterelement 3 und Gehäuseteil 2, insbesondere mit dem Deckel des Gehäuses 1 dienen. Das Filterelement 3 wird in zwei Montagepositionen in diesem Ausführungsbeispiel dargestellt, links in der Vormontageposition, rechts in der Endmontageposition. Zur Erzeugung einer zuverlässigen Rastverbindung ist im Bereich des Deckels des Gehäuseteils 2 des Gehäuses 1 eine Aussparung 6 angebracht. Diese Aussparung 6 verfügt über verschiedene Funktionsbereiche, die zum Herstellen bzw. Lösen der Rastverbindung erforderlich sind. Die Funktionsbereiche gliedern sich im einzelnen in die Bereiche Schließen, Öffnen, Translation, Rückhalten und Auslassen.

Das Filterelement 3 wird mittels einer Dichtung 16 in der Aufnahme 17 fixiert und dichtet die Rein- von der Rohfluidseite ab. Die Montage des Filterelements kann auf zweierlei Weise erfolgen. Zum einen besteht die Möglichkeit, den Filtereinsatz 3 auf die Aufnahme 17 zu stecken, um anschließend mit dem zweiten Gehäuseteil den Filter mittels Gewinde 18 zusammenzuschrauben, wobei der zweite Gehäuseteil beim Zuschrauben eine Bewegung auf den im Gehäuse befindlichen Filtereinsatz 3 hin macht. Hierbei hat das Rastmittel 4 bei zunehmender Bewegung des Gehäuseteils auf das Rastmittel zu einen sich als radial nach innen erhebenden Rückhaltebereich 10 zu überwinden, was durch die gleichzeitige Drehbewegung des Gehäuseteils dazu führt, daß das Rastmittel im Ausführungsbeispiel mit vier regelmäßig am Kreisumfang verteilten Rastmitteln bzw. korrespondierenden Aussparungen spätestens nach einer Viertelkreisumdrehung des Deckels in die dafür vorgesehene Aussparung springt und mit dieser im umgekehrten Öffnungsfall eine zuverlässige Rastverbindung 5 bildet. In einer anderen Montagevariante ist vorgesehen, den Filtereinsatz 3 direkt in den Deckelteil des Gehäuses 1 mit den Aussparungen 6 zu stecken, so daß eine Rastverbindung zwischen Filterelement 3 und Gehäuseteil 2 entsteht. Die miteinander verbundenen Teile können dann anschließend mit einer Hand in den unteren Gehäuseteil 2 bzw. auf dessen Aufnahme 17 gesteckt werden. Die beiden Gehäuseteile 2 werden anschließend miteinander mittels Gewinde 18 verbunden.

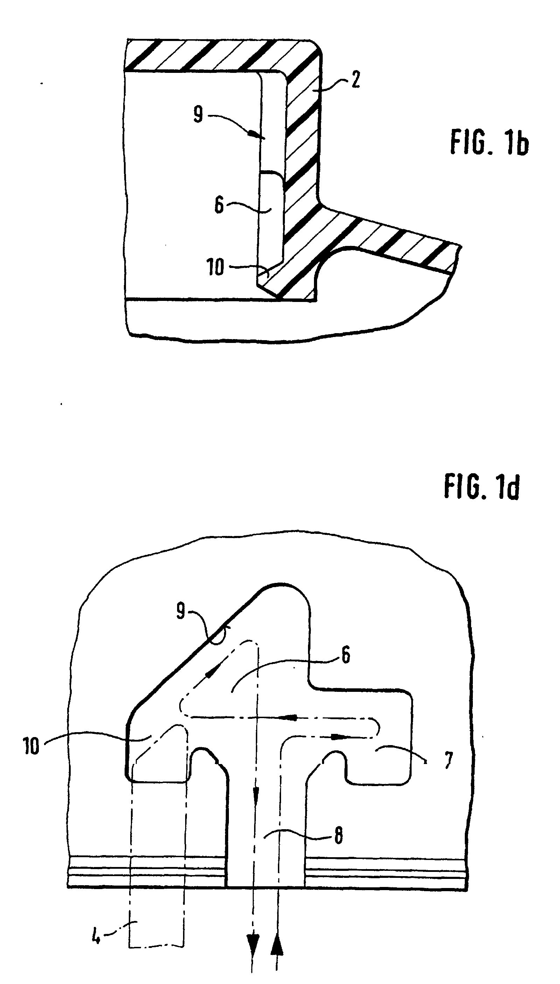

In Figur 1b ist ein Schnitt aus Figur 1a im Bereich des Deckels bzw. des Gehäuseteils 2 zu sehen. Hierbei wird deutlich, daß die Aussparung 6 verschiedene Funktionsbereiche aufweist. In dieser Darstellung sind der Translationsbereich 9 und der Rückhaltebereich 10 zu sehen.

In Figur le wird eine Abwicklung des bereits in Figur 1b dargestellten Bereiches des Gehäuseteils 2 gezeigt. Hierbei sind auf den gesamten Umfang der zylindrischen Mantelfläche vier in regelmäßigen Abständen angeordnete Aussparungen 6 zu sehen. Jede Aussparung 6 hat in der zweidimensionalen Abwicklung die Form einer gestauchten Eins. Jede Aussparung 6 ist in bestimmte Funktionsbereiche aufgeteilt. Werden nun die beiden Gehäuseteile miteinander verschraubt, so legen sich die Rastmittel 4 am Schließbereich 7 der Aussparung 6 an. Der Rückhaltebereich 10 der Aussparung 6 hat die Aufgabe, den Filtereinsatz 3 beim Herausnehmen in der Deckelhälfte des Gehäuseteils mit den Aussparungen 6 zu belassen, so daß beide Teile einhändig herausgenommen werden können. Um nun das Filterelement 3 vom Gehäuseteil 2 mit den Aussparungen 6 zu trennen, ohne eine weitere Hand zur Hilfe nehmen zu müssen, ist ein Translationsbereich 9 in der Aussparung 6 vorgesehen, der, bezogen auf die obere horizontale Gehäuseteilbegrenzung, einen Winkel von 30 Grad oder zwischen 30 und 90 Grad aufweist. Durch den in der Aussparung 6 vorgesehenen Translationsteil 9 kann über eine z. B. impulsartig längs der Gehäuse- bzw. Filterelementachse aufgebrachte Vertikalbewegung eine Relativdrehbewegung zwischen Filterelement 3 und dem Gehäuseteil mit den Aussparungen 6 bzw. den Rastmitteln 4 und den Aussparungen 6 auslösen. Durch diese Relativbewegung, z.B. verursacht durch vertikales Aufstoßen der Innenkante des Filterelementes 3 oder durch ein einfaches Verdrehen von Filterelement 3 gegen das Gehäuseteil 2, gelangen die Rastmittel 4 in den Öffnungsbereich 8 der Aussparungen 6. Im Öffnungsbereich 8 der Aussparung 6 ist der Rückhaltebereich 10 unterbrochen, so daß das Filterelement samt seinen Rastmitteln 4 ohne Widerstand aus dem Gehäuseteil 2, das die Aussparungen 6 enthält, herausfällt.

In Figur 1d wird eine Variante der Aussparung 6 mit ausgeprägterem Rückhaltebereich 10 dargestellt. Ebenfalls mittels gestrichelter Linie angedeutet, sind die Rastmittel 4. Die Aussparung 6 verfügt weiter über einen Schließbereich 7 sowie über einen Öffnungsbereich 8 und einen Translationsbereich 9.

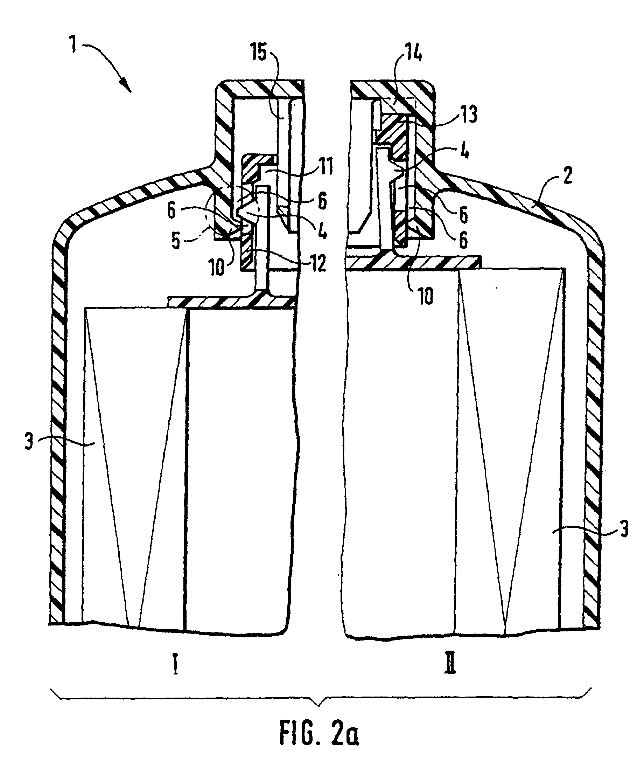

In Figur 2a werden zwei Varianten dargestellt, wobei in der Variante I die Patronenmontagesituation und die Variante II die Patronendemontagesituation zeigt. Im dargestellten Schnitt durch den Filter, der das Gehäuse 1 umfaßt, das seinerseits aus Gehäuseteilen 2 besteht und ein Filterelement 3 beinhaltet, wird auf die ausführliche Darstellung der Gehäuseteilverbindung verzichtet, da dies bereits in den oben beschriebenen Figuren geschehen ist. Diese Figur zeigt, wie die Rastmittel 4 eine lösbare Rastverbindung 5 mit den kommunizierenden Elementen, wie beispielsweise den Aussparungen 6, die in der Hülse 12 und dem Gehäuseteil 2 angeordnet sind, eingehen. In der in der Variante I dargestellten Form existiert, nachdem das Filterelement 3 mit montierter Hülse 12 in das Gehäuseteil 2 eingesteckt wurde, eine Rastverbindung 5, die das Filterelement 3 sicher im Gehäuseteil 2 zurückhält, für die die in dieser Variante gezeigte Positionierung der Rastmittel 4 in Bezug auf den Rückhaltebereich 10 verantwortlich ist. In der in der Variante II gezeigten Darstellung wird das Lösen der Rastverbindung 5 offenbart, wobei die Rastmittel 4 in eine Position gebracht werden, in der sie radial nach innen positioniert werden, in der Weise, daß sie dort in einem Entriegelungsbereich 11 verharren, der in der über bzw. um die Rastmittel 4 befindlichen Hülse 12 angeordnet ist. Damit die Rastmittel 4 in diesen Entriegelungsbereich 11 getrieben werden, muß die Hülse 12 bezogen auf die Längsachse des Filterelements 3 entlang dieser Längsachse auf das Filterelement 3 hin bewegt werden, und zwar soweit, daß die Rastmittel 4 dort einschnappen können. Dies gelingt durch eine axiale Bewegung des Gehäuseteils 2 entlang der eigenen Längsachse auf das Filterelement 3 zu, wenn das Distanzverringerungselement 13 an der Hülse 12 und das Distanzverringerungselement 14, am Gehäuseteil 2 axial übereinanderliegen. Diese Positionierung der Distanzverringerungselemente 13 und 14 zueinander beim Aufdrehen des Gehäuseteils 2 kann durch einen Anschlag der Distanzverringerungselemente 13 und 14 in Umfangsrichtung bewerkstelligt werden. Wenn nun die Rastmittel 4 derart im Entriegelungsbereich 11 verrastet sind, kann das Filterelement ohne Widerstand am Rückhaltebereich 10 vorbei aus dem Gehäuseteil 2 herausgenommen werden. Der Abstandszentrierstift 15 dient bei der Montage des Filterelements 3 als Druckelement.

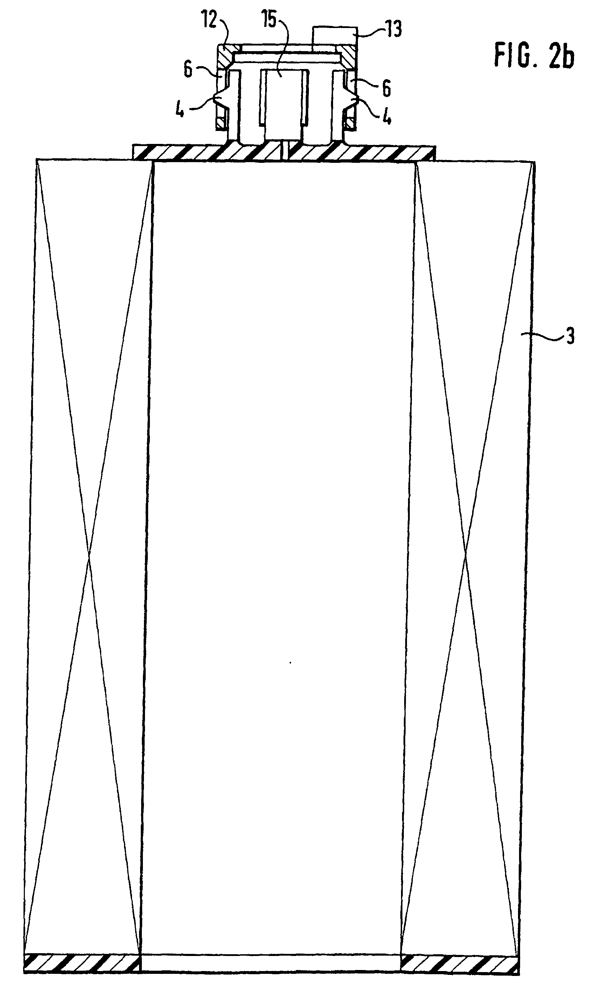

In Figur 2b wird ein Filterelement 3 dargestellt, das an seiner einen Stirnseite in radialer Richtung elastisch wirkende Rastmittel 4 aufweist. An der gleichen Stirnseite ist in Längsrichtung des Filterelements 3 ein Abstandszentrierstift angebracht, der eine alternative Umkehrung des in Figur 2a beschriebenen Prinzips darstellt. Dies ist ebenfalls bezüglich der Anordnung der Rastmittel denkbar, da im Sinne einer kinematischen Umkehr diese auch am Gehäuseteil 2 befestigt sein könnten. Um und über die Rastmittel ist eine Hülse 12 gestülpt, in deren Aussparungen 6 die Rastmittel Aufnahme finden bzw. über die gedachte Mantelfläche der Hülse 12 hinaus radial nach außen ragen. An der Außenseite der Hülsenstirnseite ist ein Distanzverringerungselement 13 angeordnet, das, wie oben beschrieben, dem Lösen der Rastverbindung dient.

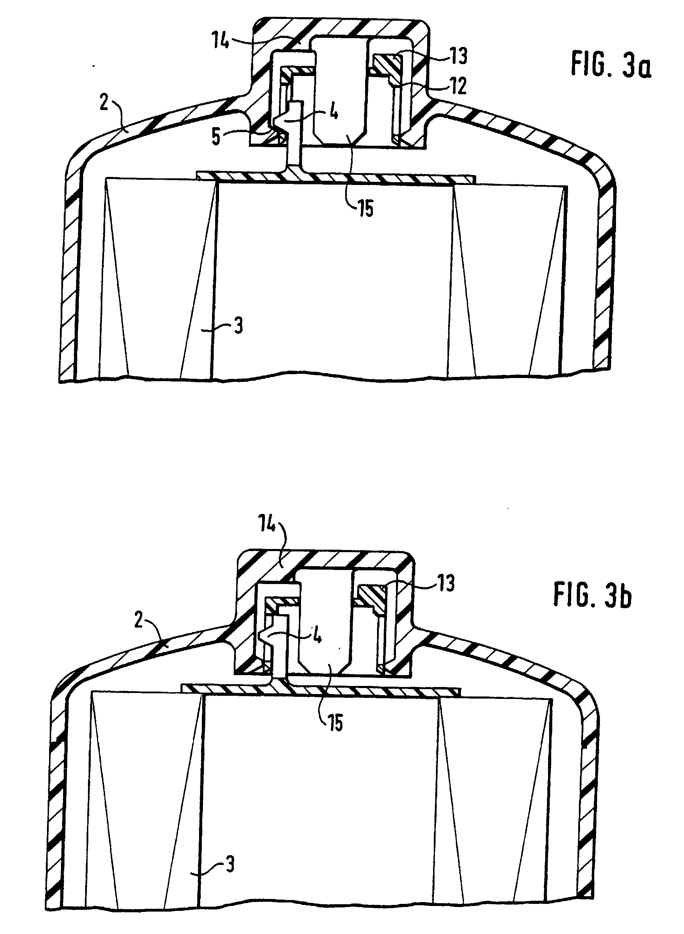

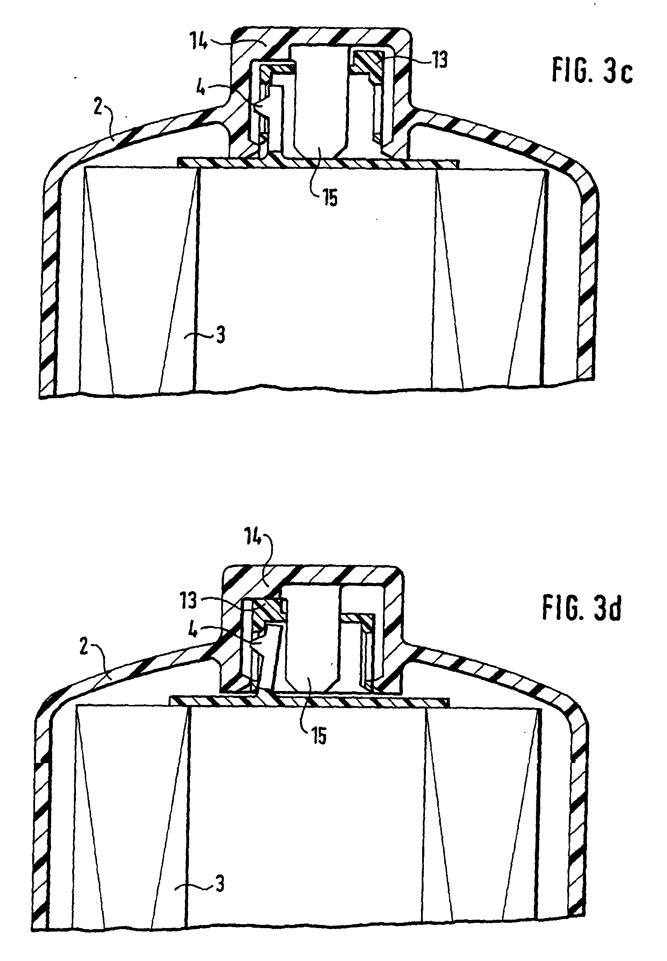

In den Figuren 3a bis 3d werden verschiedene Varianten dargestellt, wobei in den Varianten der Figuren 3a bis 3c die Patronenmontagesituation bei sicherer Rastverbindung und in der Variante in Figur 3d die Patronendemontagesituation gezeigt wird, bei der ein einfaches, widerstandsloses Herausnehmen des Filterelements möglich ist. In den dargestellten Schnitten gemäß der Figuren 3a bis 3c durch den Filter, der das Gehäuse 1 umfaßt, das seinerseits aus Gehäuseteilen 2 besteht und ein Filterelement 3 beinhaltet, wird die mit den Rastmitteln 4 erzeugte lösbare Rastverbindung 5 mit den kommunizierenden Elementen, wie beispielsweise den Aussparungen 6, die in der Hülse 12 oder dem Gehäuseteil 2 angeordnet sind, gezeigt. In der in der Figur 3a dargestellten Form existiert, nachdem das Filterelement 3 in das Gehäuseteil 2 eingesteckt wurde, eine Rastverbindung 5, die das Filterelement 3 sicher im Gehäuseteil 2 zurückhält, für die die in dieser Variante gezeigte Positionierung der Rastmittel 4 in Bezug auf den Rückhaltebereich 10 verantwortlich ist. Durch die Anordnung der Distanzverringerungselemente 13 und 14 in der Weise, daß sie in den Figuren 3a bis 3c nicht in direktem axialen Kontakt stehen, macht in der Folge deutlich, daß in keiner Stellung des Gehäuses (Figuren 3a bis 3c) die Rastverbindung 5 durch eine Zugkraft auf die Patrone gelöst werden kann, wobei der Abstandszentrierstift die Bewegungsfreiheit des Gehäuses begrenzt.

In der in der Figur 3d gezeigten Darstellung wird das Lösen der Rastverbindung offenbart, wobei die Rastmittel 4 in eine Position gebracht werden, in der sie radial nach innen positioniert werden, in der Weise, daß sie dort in einem Entriegelungsbereich 11 verharren, der in der über bzw. um die Rastmittel 4 befindlichen Hülse 12 angeordnet ist. Damit die Rastmittel 4 in diesen Entriegelungsbereich 11 gelangen können, muß die Hülse 12 bezogen auf die Längsachse des Filterelements 3 entlang dieser Längsachse auf das Filterelement 3 hin bewegt werden, und zwar soweit, daß die Rastmittel 4 dort einschnappen können. Dies gelingt durch eine axiale Bewegung des Gehäuseteils 2 entlang der eigenen Längsachse auf das Filterelement 3 zu, wenn das Distanzverringerungselement 13 an der Hülse 12 und das Distanzverringerungselement 14 am Gehäuseteil 2 axial übereinanderliegen. Diese Positionierung der Distanzverringerungselemente 13 und 14 zueinander beim Aufdrehen des Gehäuseteils 2 kann durch einen Anschlag der Distanzverringerungselemente 13 und 14 in Umfangsrichtung bewerkstelligt werden. Wenn nun die Rastmittel 4 derart im Entriegelungsbereich 11 verrastet sind, kann das Filterelement ohne Widerstand am Rückhaltebereich 10 vorbei aus dem Gehäuseteil 2 herausgenommen werden. Die Funktion des Abstandszentrierstiftes als Druckelement bei der Montage kann auch von den Hakenrändern des Rückhaltebereiches 10 bzw. von den Rastmitteln 4 übernommen werden.

## Patentansprüche

1. Filter, umfassend ein Gehäuse (1), das aus wenigstens zwei Gehäuseteilen (2) besteht, ein Filterelement (3), das im Gehäuse (1) befestigt ist, wobei wenigstens ein Rastmittel (4) vorgesehen ist, mittels dem eine lösbare Rastverbindung (5) zwischen Filterelement (3) und wenigstens einem der Gehäuseteile (2) herstellbar ist, **dadurch gekennzeichnet, daß** die Rastverbindung aus wenigstens einem Rastmittel (4) und einer mit diesem korrespondierenden Aussparung (6), in dem sich das Rastmittel bajonettartig verhakt, besteht, wobei die Aussparung folgende Bereiche aufweist:
- einen Schließbereich (7) zur Aufnahme des Rastmittels während der Verschraubung der Gehäuseteile,
- einen Rückhaltebereich (10) zur Aufnahme des Rastmittels während der Öffnung des Gehäuses,
- einen Translationsbereich (9) zur Lösung der Rastmittel in der Aussparung und
- einen Öffnungsbereich (8) zum widerstandsfreien Trennen von Rastmittel (4) und Aussparung (6).

2. Filter nach Anspruch 1, **dadurch gekennzeichnet, daß** wenigstens ein Rastmittel (4) am Filterelement (3) angeordnet ist.

3. Filter nach einem oder mehreren der vorgenannten Ansprüche, **dadurch gekennzeichnet, daß** wenigstens ein Rastmittel (4) an wenigstens einem Gehäuseteil (2) angeordnet ist.

4. Filter nach einem oder mehreren der vorgenannten Ansprüche, **dadurch gekennzeichnet, daß** wenigstens eine korrespondierende Aussparung (6) an wenigstens einem Gehäuseteil (2) angeordnet ist.

5. Filter nach einem oder mehreren der vorgenannten Ansprüche, **dadurch gekennzeichnet, daß** wenigstens eine korrespondierende Aussparung (6) am Filterelement (6) angeordnet ist.

6. Filter, umfassend ein Gehäuse (1), das aus wenigstens zwei Genausetellen (2) besteht, ein Filterelement (3), das im Gehäuse (1) befestigt ist, wobei wenigstens ein Rastmittel (4) vorgesehen ist, mittels dem eine lösbare Rastverbindung (5) zwischen Filterelement und wenigstens einem der Gehäuseteile (2) herstellbar ist, wobei im Bereich des Rastmittels (4) eine Hülse (12) angeordnet ist, **dadurch gekennzeichnet, daß** die Hülse (12) und/oder die zur Herstellung der Verbindung benötigte Gehäusehälfte (2) folgende Bereiche aufweist:
- einen Rückhaltebereich (10) zur Fixierung der Rastmittel (4) in besagten Gehäuseteil (2),
- Distanzverringerungselemente (14, 15), die in besagtem Gehäuseteil (2) und der Hülse (12) untergebracht sind,
- einen Anschlag zur Positionierung der Distanzverringerungselement übereinander beim Aufdrehen des besagten Gehäuseteils (2),
- einen Entriegelungsbereich (11) zur Verrastung der Rastmittel (4) bei übereinander positionierten Distanzverringerungselementen (14, 15) und zum widerstandsfreien Trennen von Filterelement (3) und besagtem Gehäuseteil (2).

## Claims

1. Filter, including a housing (1) which comprises at least two housing parts (2), a filter element (3) which is mounted in the housing (1), at least one locking means (4) being provided, by means of which a detachable locking connection (5) is establishable between the filter element (3) and at least one of the housing parts (2), **characterised in that** the locking connection comprises at least one locking means (4) and a recess (6) corresponding to said means, in which recess the locking means is hooked in a bayonet-connection-like manner, the recess having the following regions:
- a closing region (7) for accommodating the locking means during the screw-connection of the housing parts,
- a retaining region (10) for accommodating the locking means during the opening of the housing,
- a translational region (9) for releasing the locking means in the recess, and
- an opening region (8) for the resistance-free separation of the locking means (4) and the recess (6).

2. Filter according to claim 1, **characterised in that** at least one locking means (4) is disposed on the filter element (3).

3. Filter according to one or more of the above-mentioned claims, **characterised in that** at least one locking means (4) is disposed on at least one housing part (2).

4. Filter according to one or more of the above-mentioned claims, **characterised in that** at least one corresponding recess (6) is disposed in at least one housing part (2).

5. Filter according to one or more of the above-mentioned claims, **characterised in that** at least one corresponding recess (6) is disposed in the filter element (3).

6. Filter, including a housing (1) which comprises at least two housing parts (2), a filter element (3) which is mounted in the housing (1), at least one locking means (4) being provided, by means of which a detachable locking connection (5) is establishable between the filter element and at least one of the housing parts (2), a sleeve (12) being disposed in the region of the locking means (4), **characterised in that** the sleeve (12) and/or the housing half (2), which is required to establish the connection, include/includes the following regions:
- a retaining region (10) for securing the locking means (4) in said housing part (2),
- distance-reducing elements (14, 15), which are accommodated in said housing part (2) and in the sleeve (12),
- a stop member for positioning the distance reducing elements above each other during the twisting-open of said housing part (2), and
- an unlocking region (11) for the fitting of the locking means (4) when the distance reducing elements (14, 15) are positioned above each other and for the resistance-free separation of filter element (3) and said housing part (2).

## Revendications

1. Filtre comprenant un boîtier (1) formé d'au moins deux parties (2), d'un élément de filtre (3) fixé dans le boîtier (1) avec au moins un moyen d'accrochage (4) réalisant une liaison d'encliquetage (5) amovible est réalisée entre l'élément de filtre (3) et au moins l'une des parties de boîtier (2),
**caractérisé en ce que**
la liaison d'encliquetage se compose d'au moins un moyen d'encliquetage (4) et d'une cavité (6) correspondante dans laquelle le moyen d'encliquetage s'accroche par une liaison de type baïonnette,
la cavité ayant des zones définies comme suit :
- une zone de fermeture (7) pour recevoir le moyen d'accrochage pendant le vissage des parties de boîtier,
- une zone de retenue (10) pour recevoir le moyen d'accrochage pendant l'ouverture du boîtier,
- une zone de translation (9) pour dégager le moyen d'accrochage de la cavité,
- une zone d'ouverture (8) pour séparer sans résistance le moyen d'accrochage (4) et la cavité (6).

2. Filtre selon la revendication 1,
**caractérisé en ce qu'**
au moins un moyen d'accrochage (4) est prévu sur l'élément de filtre (3).

3. Filtre selon l'une quelconque des revendications précédentes,
**caractérisé en ce qu'**
au moins un moyen d'accrochage (4) est prévu sur une partie de boîtier (2).

4. Filtre selon l'une quelconque des revendications précédentes,
**caractérisé en ce qu'**
au moins une cavité correspondante (6) est prévue sur au moins une partie de boîtier (2).

5. Filtre selon l'une quelconque des revendications précédentes,
**caractérisé en ce qu'**
au moins une cavité correspondante (6) est prévue sur l'élément de filtre (6).

6. Filtre comprenant un boîtier (1) formé d'au moins deux parties de boîtier (2), d'un élément de filtre (3) fixé dans le boîtier (1) et au moins un moyen d'accrochage (4) réalisant une liaison d'accrochage (5) amovible entre l'élément de filtre et au moins l'une des parties de boîtier (2), et la zone du moyen d'accrochage (4) comporte un manchon (12),
**caractérisé en ce que**
le manchon (12) et/ou la moitié de boîtier (2) nécessaire pour réaliser la liaison comportent les zones suivantes :
- une zone de retenue (10) pour fixer le moyen d'accrochage (4) dans la partie de boîtier (2) concernée,
- des éléments de réduction de distance (14, 15) logés dans la partie de boîtier concernée et dans le manchon (12),
- une butée pour superposer l'élément de réduction de distance lors du vissage de la partie de boîtier (2),
- une zone de déverrouillage (11) pour décrocher le moyen d'accrochage (4) en cas de superposition des éléments de réduction de distance (14, 15) et pour le séparer sans résistance par rapport à l'élément de filtre (3) et à la partie de boîtier concernée.
